# EUROPÄISCHE PATENTANMELDUNG

(11) **EP 4 137 709 A2**
(43) Veröffentlichungstag der Anmeldung: **22.02.2023**
(21) Anmeldenummer: 22177314.6
(22) Anmeldetag: 03.06.2022
(51) Int. Cl.: F16B 21/02, F16B 37/04, B32B 3/28

(54) **BEFESTIGUNGSELEMENT, KERNVERBUNDSTRUKTUR, BEFESTIGUNGSSYSTEM SOWIE FAHRZEUG MIT EINER KERNVERBUNDSTRUKTUR**

(30) Priorität: 04.06.2021 DE 102021114415
(71) Anmelder: Endres, Gregor, 04179 Leipzig (DE)
(72) Erfinder: Endres, Gregor, 04179 Leipzig (DE)
(74) Vertreter: Weidner Stern Jeschke

(57) **Zusammenfassung**

Die Erfindung betrifft ein Befestigungselement (401) zum Bereitstellen eines Anschlusselementes (430) an einem Befestigungsort in einer Kernverbundstruktur, mit einem Grundelement (421), einer Betätigungseinrichtung (423), einem ersten Expansionselement (427) und einer Längsachse, wobei die Betätigungseinrichtung ein radiales Betätigungsmittel (428) aufweist und das radiale Betätigungsmittel bei einer ersten Drehbewegung der Betätigungseinrichtung gegenüber dem Grundelement ein im Wesentlichen radial zumindest abschnittsweises Erweitern des ersten Expansionselementes von einer ersten Ruheposition in eine erste Expansionsposition zum formschlüssigen Befestigen des Befestigungselementes bewirkt, wobei die Betätigungseinrichtung mittels eines axialen Betätigungsmittels bei einer zweiten Drehbewegung der Betätigungseinrichtung eine Axialbewegung des ersten Expansionselementes von der ersten Expansionsposition in eine erste Spannposition entlang der Längsachse gegenüber dem Grundelement zum Erreichen eines Kraftschlusses des Grundelementes und des ersten Expansionselementes mit der zwischen dem Grundelement und dem ersten Expansionselement angeordneten oberen Decklage bewirkt.

## Beschreibung

Die Erfindung betrifft ein Befestigungselement zum Bereitstellen eines Anschlusselementes an einem Befestigungsort an einer Kernverbundstruktur gemäß dem Oberbegriff des Anspruchs 1. Weiterhin betrifft die Erfindung eine Kernverbundstruktur, insbesondere zum Aufnehmen eines solchen Befestigungselementes, gemäß dem Oberbegriff des Anspruchs 10, ein Befestigungssystem sowie ein Fahrzeug mit einer Kernverbundstruktur, einem oder mehreren Befestigungselementen und/oder einem Befestigungssystem.

Bekannte Befestigungselemente, insbesondere zum Bereitstellen eines Anschlusselementes in einer Kernverbundstruktur sind häufig irreversibel ausgeführt, indem beispielsweise ein mehrteiliges sogenanntes Insert in eine Kernverbundstruktur eingeklebt wird. Ein entsprechender Prozess zum Erbringen ist sehr aufwändig.

Weiterhin sind, beispielsweise aus der DE 10 2010 026 965 A1, Befestigungselemente nach Art eines Spreizdübels, auch für Kernverbunde, bekannt. Zudem sind, beispielsweise aus der DE 10 2018 202 478 A1, mehrteilige Befestigungssysteme für Kernverbundstrukturen, insbesondere aus Normteilen, bekannt. Dabei ist jedoch ein Kraftanschluss an die Decklagen der Kernverbundstruktur nicht optimal ausgeführt.

Aufgabe der Erfindung ist es, den Stand der Technik zu verbessern.

Gelöst wird die Aufgabe durch ein Befestigungselement zum Bereitstellen eines Anschlusselementes an einem Befestigungsort in einer Kernverbundstruktur gemäß Anspruch 1. Vorteilhafte Ausgestaltungen ergeben sich anhand der zugehörigen Unteransprüche.

Insbesondere durch das Zusammenwirken des ersten Expansionselementes zum formschlüssigen Befestigen innerhalb der Kernverbundstruktur und der Beweglichkeit des ersten Expansionselementes entlang der Führungseinrichtung entlang der Längsachse kann nach dem formschlüssigen Befestigen zusätzlich ein kraftschlüssiges Befestigen des ersten Expansionselementes derart erfolgen, dass das erste Expansionselement entlang der Führungseinrichtung gegenüber dem Grundelement mit der jeweiligen Decklage verspannt wird. Dabei liegt das Grundelement an einer Seite der oberen Decklage an, während das erste Expansionselement insbesondere an einer gegenüberliegenden Seite der oberen Decklage, also beispielsweise einer der Kernstruktur zugewandten Seite der oberen Decklage, angeordnet ist und so die obere Decklage, insbesondere ein Randbereich der oberen Decklage, entlang einer Öffnung zwischen dem Grundelement und dem ersten Expansionselement angeordnet ist und eingespannt wird. Damit ist insbesondere ein spannungsoptimiertes Anschließen des Befestigungselementes an die Decklage erreicht, wodurch eine Rissprävention, eine Befestigung ohne unnötiges Spiel und zudem insbesondere ein Sichern des ersten Expansionselementes gegen ein unbeabsichtigtes Lösen erfolgen kann.

Folgende Begriffe seien in diesem Zusammenhang erläutert:
Ein "Befestigungselement zum Bereitstellen eines Anschlusselementes" ist ein mechanisches, insbesondere mehrteiliges, Element, welches derart in eine Kernverbundstruktur eingebracht werden kann, dass ein mechanischer Anschluss des Befestigungselementes an die Kernverbundstruktur zuverlässig erfolgt und gleichzeitig ein "Anschlusselement", also ein beispielsweise als Fixpunkt wirkender Anschlusspunkt für weitere Komponenten am jeweiligen "Befestigungsort" bereitgestellt wird. Das "Anschlusselement" ist dabei beispielsweise als Ring, als Gewinde oder als Haken oder auch als insbesondere über die Kernverbundstruktur herausstehender Dorn, Kugeldorn oder andres formschlüssiges Element ausgeführt, sodass ein Befestigen der weiteren Komponente daran ermöglicht ist. Dazu ist das Anschlusselement mit einem "Grundelement", also mit einem eine Grundstruktur des Befestigungselementes bildenden Element, verbunden und mechanisch an dieses angeschlossen.

Weiterhin weist das Befestigungselement eine "Betätigungseinrichtung" auf, welche beispielsweise beweglich zum Grundelement angeordnet ist und insbesondere bei und nach dem Einsetzen des Befestigungselementes in einer Öffnung der Kernverbundstruktur zugänglich ist, um die Betätigungseinrichtung, beispielsweise manuell oder mittels eines Werkzeugs, entlang einer "Bewegung", die beispielsweise als Drehbewegung, als Axialbewegung und/oder als gekoppelte Bewegung mit rotatorischem und axialem Anteil ausgeführt ist, betätigen zu können. Dabei ist die Betätigungseinrichtung insbesondere als innerhalb des Grundelementes, insbesondere axial entlang der Längsachse angeordnetes, insbesondere rotationssymmetrisches Bauteil ausgeführt. Beispielsweise ist die Betätigungseinrichtung eine entsprechend im Grundelement geführte Hülse oder Welle mit beispielsweise einem Absatz zur axialen Wegbegrenzung für eine Decklage und/oder für das Expansionselement zumindest in einer Richtung. Die Betätigungseinrichtung wirkt auf ein "erstes Expansionselement", wobei insbesondere mittels der Betätigungseinrichtung ein zumindest abschnittsweises Expandieren, also Erweitern des ersten Expansionselementes in Bezug zur Längsachse, ermöglicht ist. Dazu weist die Betätigungseinrichtung ein "radiales Betätigungsmittel" auf, welches beispielsweise durch ein Gewinde und eine keilförmige Fläche, ein Kegelgewinde und/oder einen oder mehrere Nocken und/oder Vorsprünge an der Betätigungseinrichtung ausgeführt ist, sodass die Bewegung, der Betätigungseinrichtung mechanisch eine radiale Wirkung auf das erste Expansionselement entfaltet und dieses aufweitet. Es sei hierzu erwähnt, dass als geometrischer Bezug für die beschriebenen Vorgänge jeweils eine "Längsachse" dient, welche beispielsweise axial durch das Befestigungselement verläuft und in einer montierten Position des Befestigungselementes im Kernverbund insbesondere zur oberen Decklage im Wesentlichen orthogonal angeordnet ist. Dabei kann diese Längsachse auch als Rotationsachse für jeweils rotatorisch miteinander verbundene Bauteile des Befestigungselementes, beispielsweise die Betätigungseinrichtung, dienen.

Weiterhin sei hierzu erwähnt, dass insbesondere das Grundelement sowie die Betätigungseinrichtung und/oder ein jeweiliges Expansionselement axial ineinander geführt angeordnet sein können, wobei insbesondere das erste Expansionselement oder auch weitere Expansionselemente derart mechanisch gefangen mit dem Grundelement und der Betätigungseinrichtung verbunden sein können, dass das Befestigungselement von einem Bediener einteilig verwendet werden kann.

Ein "Erweitern des ersten Expansionselementes" bezeichnet dabei eine zumindest abschnittsweise Geometrievergrößerung in radialer Richtung in Bezug zur Längsachse zum Überführen in eine "Expansionsposition". Somit wird eine, zumindest lokale, Aufweitung des Expansionselementes derart erreicht, dass das erste Expansionselement in einer montierten Position von außerhalb der Kernverbundstruktur betrachtet an einer Innenseite der oberen Decklage expandiert und damit dem Formschluss mit der oberen Decklage erwirkt. Dabei greift das erste Expansionselement in der ersten Expansionsposition insbesondere an einem Randbereich einer Öffnung in der oberen Decklage an. Demgegenüber beschreibt die jeweilige "Ruheposition" eine beispielsweise lokale oder zumindest abschnittsweise kontrahierte Position des jeweiligen Expansionselementes, sodass das jeweilige Expansionselement durch die Öffnung in der oberen Decklage einführbar ist.

Eine "Führungseinrichtung" des Grundelementes ist beispielsweise ein zylindrischer, konischer oder auch prismatischer Abschnitt des Grundelementes oder ein zylindrischer, konischer oder prismatischer Abschnitt eines mit dem Grundelement wirkverbundenen Bauteils wie beispielsweise der Betätigungseinrichtung, welches direkt oder indirekt zum Grundelement eine Führung des jeweiligen Expansionselementes entlang der Längsachse ermöglicht. Insbesondere kann die Führungseinrichtung dabei auch durch eine zylindrische Außenfläche der Betätigungseinrichtung, beispielsweise eines zylinderförmigen Betätigungsteil, ausgeführt sein. Ein "axiales Betätigungsmittel" an der Betätigungseinrichtung wirkt dabei derart auf das erste Expansionselement, dass das erste Expansionselement entlang der Führungseinrichtung zwangsweise bewegt werden kann, indem beispielsweise das axiale Betätigungsmittel ein auf der Betätigungseinrichtung angebrachtes Gewinde aufweist, welches bei einer Drehbewegung der Betätigungseinrichtung ein axiales Verschieben des ersten Expansionselementes gegenüber dem Grundelement mittels der Gewindesteigung bewirkt.

Folglich ist insbesondere mittels des axialen Betätigungsmittels ein Verspannen des ersten Expansionselementes in Expansionsposition gegenüber dem Grundelement möglich, sodass die obere Decklage kraftschlüssig zwischen diesen beiden Bauteilen eingeklemmt wird.

Um zusätzlich zumindest eine kraftschlüssige Verbindung auch mit der unteren Decklage herstellen zu können, weist das erste Expansionselement ein in der ersten Expansionsposition und/oder in der ersten Spannposition an der unteren Decklage anliegendes Abstandselement auf. Dabei ist eine Länge des Abstandselementes entlang der Längsachse im Wesentlichen an eine Dicke der Kernverbundstruktur zwischen der oberen Decklage und der unteren Decklage am Befestigungsort angepasst.

Ein solches "Abstandselement" ist dabei beispielsweise eine Hülse, welche mechanisch zumindest in der Spannposition zwischen der oberen Decklage und der unteren Decklage anliegt und damit zumindest von der oberen Decklage ausgehend Druckbelastungen in die untere Decklage einleiten kann. Dazu ist eine Länge des Abstandselementes entweder exakt anhand der Dicke der Kernstruktur am entsprechenden Befestigungsort angepasst oder zusätzlich mit einer, insbesondere definierten, Toleranz versehen, um beispielsweise eine Vorspannung, einen Freiweg oder dergleichen zu ermöglichen .Diese Anpassung erfolgt dann anhand beispielsweise eines entsprechenden Materialverhaltens der oberen Decklage oder der unteren Decklage sowie auch der Kernstruktur.

Hierbei kann an einer dem Grundelement gegenüber angeordneten Decklage der Kernverbundstruktur, also der unteren Decklage, insbesondere wenn diese untere Decklage ohne Öffnung am Befestigungsort ausgeführt ist, ein Aufnahmemittel wie beispielsweise ein Gewindebolzen oder ein Kugelkopf angeordnet sein, wobei das Abstandselement ein zum Aufnahmemittel korrespondierendes Eingriffsmittel wie beispielsweise ein Gewinde oder eine Kugelkopfaufnahme aufweist. Das Gewinde kann beispielsweise auch gleichsam mit dem Aufnahmeelement für die weitere Komponente ausgeführt sein.

Insbesondere kann das Abstandselement ein zweites Expansionselement aufweisen, welches mittels des radialen Betätigungsmittels bei der ersten Drehbewegung der Betätigungseinrichtung gleichwirkend zum ersten Expansionselement mit der unteren Decklage in Eingriff bringbar ist, sodass auch ein formschlüssiger Anschluss insbesondere an einen Randbereich einer Öffnung in der unteren Decklage ermöglicht ist. Hierzu kann das zweite Expansionselement auch an der Führungseinrichtung entlang der Längsachse geführt sein, sodass insbesondere dabei mittels des axialen Betätigungsmittels bei der zweiten Drehbewegung der Betätigungseinrichtung auch eine Axialbewegung des zweiten Expansionselementes entlang der Führungseinrichtung derart ausgelöst wird, dass ein zusätzliches kraftschlüssiges Verspannen mit der unteren Decklage erfolgt.

Es sei dazu darauf hingewiesen, dass die erste Spannposition und die zweite Spannposition beispielsweise durch die mechanische und geometrische Ausgestaltung der Betätigungseinrichtung und/oder des Abstandselementes mechanisch gekoppelt sein können, sodass beispielsweise mit einem entlang der Dicke des Kernverbundes angeordneten Erstreckung der Betätigungseinrichtung ein gleichzeitiges und gleichwirkendes Betätigen des jeweiligen Expansionselementes sowohl zum radialen als auch zum axialen Wirken ermöglicht ist.

In einer Ausführungsform ist das jeweilige Expansionselement dabei mittels eines radialen Federelementes reversibel verformbar ausgeführt. Somit kann, insbesondere wenn die Betätigungseinrichtung entgegen der ersten Drehbewegung und entgegen der zweiten Drehbewegung gegensinnig betätigt wird, ein rückstandsloses Entfernen des Befestigungselementes aus der Kernverbundstruktur erreicht werden. Beispielsweise weist das jeweilige Expansionselement dazu Federarme auf oder ist mittels einer mechanischen Feder derart ausgestattet, dass das Überführen von der Ruheposition in die jeweilige Expansionsposition mittels der jeweiligen Feder reversibel federbelastet möglich ist.

Ebenso kann das Befestigungselement derart ausgeführt sein, dass das jeweilige Expansionselement aus der jeweiligen Ruheposition mittels eines radial-axialen Betätigungsmittels der Betätigungseinrichtung mit insbesondere einer gekoppelten Drehbewegung aus der ersten Drehbewegung und der zweiten Drehbewegung durch eine Verspannungsbewegung gegenüber dem Grundelement und/oder gegenüber dem Abstandselement bewegt werden kann. Dies erfolgt entlang einer in einem spitzen Winkel zur Längsachse angeordneten Verspannungsrichtung. Es wird hierbei also ein jeweiliger Bestandteil des jeweiligen Expansionselementes insbesondere derart schräg gegenüber der Längsachse zwangsgeführt, dass gleichzeitig ein Aufspreizen und/oder Erweitern des jeweiligen Expansionselementes und ein Heranführen des jeweiligen Expansionselementes an die jeweilige Decklage erfolgt, sodass ein Formschluss und ein Kraftschluss gleichzeitig oder mit einer gemeinsamen Bewegung direkt aufeinanderfolgend erreicht werden. Eine "Verspannungsposition" beschreibt dabei die Position, in der sowohl das Erweitern des jeweiligen Expansionselementes, als auch das Heranziehen des jeweiligen Expansionselementes an das Grundelement erreicht ist, sodass die jeweilige Decklage auch kraftschlüssig eingebunden ist.

In einer Ausführungsform ist das jeweilige Expansionselement derart ausgeführt, dass mit der jeweiligen Decklage ein Bajonettverschluss gebildet ist. Dazu ist das jeweilige Expansionselement in Bezug zur Längsachse um einen Umfang radial ungleichförmig ausgebildet, also beispielsweise oval, sternförmig, viereckig oder anders ungleichmäßig geformt, sodass eine hinterschneidungsbildende Formgebung erreicht ist. Eine dazu korrespondierend ausgeführte Öffnungsform der Öffnung einer jeweiligen Decklage bewirkt dann, dass beispielsweise das Befestigungselement in die jeweilige Öffnung oder durch die Kernverbundstruktur hindurch durch eine Öffnung oder durch Öffnungen in eine Decklage oder beiden Decklagen eingebracht werden kann, mittels der ersten Bewegung bajonettartig an einer Decklage oder beiden Decklagen vorbefestigt wird und dann mittels einer insbesondere weiteren Bewegung der Betätigungseinrichtung gemäß der zweiten Bewegung ein kraftschlüssiges Verspannen mit der Decklage oder den Decklagen erfolgt. Ist beispielsweise das Befestigungselement mit einem unterlegscheibenartigen Grundkörper sowie einer als entlang der Längsachse geführten bolzenartigen Betätigungseinrichtung ausgeführt, so kann das als Bajonettverschluss ausgeführte jeweilige Expansionselement mit der Betätigungseinrichtung verdreht und sodann mittels beispielsweise einem Gewinde auf der Betätigungseinrichtung an die jeweilige Decklage herangezogen werden.

Um entsprechende Funktionen sicher miteinander zu koppeln und das Befestigungselement in der Anwendung komfortabel zu gestalten, weist das radiale Bedienmittel ein radiales Begrenzungsmittel auf, wobei die erste, insbesondere als Drehbewegung um die Längsachse ausgeführte Bewegung der Betätigungseinrichtung einen durch das radiale Begrenzungsmittel rotatorisch begrenzten Drehwinkel aufweist. Dieser rotatorisch begrenzte Drehwinkel beträgt dabei insbesondere weniger als 90°, weniger als 60°, weniger als 30°, weniger als 25°, weniger als 20° oder insbesondere weniger als 15°. Das radiale Begrenzungsmittel, das gleichsam einen mechanischen Anschlag für das jeweilige Expansionselement bildet, lässt dabei ein beispielsweise Verdrehen oder Verschieben des Betätigungselementes zum rotatorischen Aktivieren der jeweiligen Expansionseinrichtung zu, wobei dann, insbesondere nach Erreichen des radialen Begrenzungsmittels, die axiale Bewegung zum Verspannen mit den jeweiligen Decklagen erfolgt.

In einer Ausführungsform ist oder sind dabei das radiale Betätigungsmittel, das axiale Betätigungsmittel und/oder das radial-axiale Betätigungsmittel mittels eines Reibschlusses, mittels einer Sollbruchstelle und/oder mittels eines mechanischen Freilaufs insbesondere mit einem Freilaufwinkel derart mechanisch gekoppelt, dass die erste Bewegung und die zweite Bewegung, insbesondere mittels eines definierten Freilaufwinkels für das jeweilige Expansionselement, zwangsweise aufeinanderfolgend gekoppelt sind.

So kann beispielsweise mittels eines Reibschlusses zwischen der Betätigungseinrichtung und des jeweiligen Expansionselementes bewirkt werden, dass, am Beispiel eines Bajonettverschlusses erklärt, zunächst die Bajonettbewegung erfolgt, und dann, insbesondere nach Erreichen des radialen Begrenzungsmittels, der Reibschluss überwunden wird und damit die Axialbewegung zum Verklemmen des Befestigungselementes mit der jeweiligen Decklage erfolgt. Gleichsam wirkend kann eine mechanische Sollbruchstelle zwischen der Betätigungseinrichtung und dem jeweiligen Expansionselement ausgeführt sein, welche beispielsweise mittels eines Kunststoffelementes mit definierter Bruchlast ausgeführt sein kann. Weitere, insbesondere komplexere mechanische Freiläufe sind hier ebenfalls möglich. Der "Freilaufwinkel" beschreibt dabei insbesondere den rotatorisch begrenzten freien Drehwinkel zwischen den Bauteilen, welcher die entsprechende mechanische Kopplung definiert.

Zur Betätigung kann die Betätigungseinrichtung eine Rändelung, eine Werkzeugaufnahme und/oder ein Schloss aufweisen, sodass ein Bedienen der Betätigungseinrichtung jeweils ermöglicht ist. So kann beispielsweise eine dem Bediener zugewandte Oberfläche der Betätigungseinrichtung in Richtung der Längsachse mit einer Rändelung versehen sein, sodass ein manuelles Betätigen ermöglicht ist. Weiterhin kann eine Werkzeugaufnahme vorgesehen sein.

Insbesondere wenn die Betätigungseinrichtung, wie oben beschrieben, als entlang der Längsachse verlaufender Bolzen oder Hohlbolzen ausgeführt ist, kann beispielsweise das Anschlusselement als axiales Innengewinde ausgeführt sein, wobei eine dem Bediener zugewandte Aufweitung dann beispielsweise eine Sechskant-Bedienung für einen Innen-Sechskantschlüssel aufweist.

In einer Ausführungsform ist das Anschlusselement dabei an der Betätigungseinrichtung angeordnet, wobei das Anschlusselement insbesondere als entlang der Längsachse angeordnetes Gewinde in der Betätigungseinrichtung ausgebildet ist. Ebenso kann die Betätigung des Betätigungselementes direkt oder indirekt mittels eines Einwirkens auf das Anschlusselement erfolgen, beispielsweise mittels eines Drehens des Betätigungselementes mittels einer im Anschlusselement eingeführten Schraube.

Es sei erwähnt, dass zu jeder Ausführungsform auch ein entlang der Längsachse zwischen dem Grundkörper und dem jeweiligen Expansionselement angeordneter Abstandshalter vorgesehen sein kann, welcher starr oder auch elastisch ausgeführt ist, um beispielsweise für die Montage einen definierten Abstand zwischen jeweiligem Expansionselement und Grundelement und/oder jweiligem Expansionselement und Abstandselement bereitzustellen, welcher im Wesentlichen der Dicke der jeweilig anzuschließenden Decklage entspricht, wobei hier eine zusätzliche Montagetoleranz vorgesehen sein kann. Ebenso können Dichtelemente vorgesehen sein, welche zwischen dem Grundelement und/oder dem Abstandselement und der jeweiligen Decklage eine Abdichtung erreichen und beispielsweise als Dichtscheibe oder als O-Ring ausgeführt sind.

In einem weiteren Aspekt wird die Aufgabe gelöst durch eine Kernverbundstruktur, insbesondere eine Sandwichstruktur gemäß Anspruch 10. Vorteilhafte Ausgestaltungen sind den diesbezüglichen Unteransprüchen zu entnehmen.

Dabei weisen die obere Decklage und/oder die untere Decklage eine die jeweilige Decklage vollständig durchdringende obere Öffnung und/oder untere Öffnung auf, wobei an einer jeweiligen Öffnung zumindest ein jeweiliges Aufnahmemittel für das jeweilige Expansionselement angeordnet ist. Das jeweilige Expansionselement ist in der jeweiligen Expansionsposition und/oder der jeweiligen Spannposition mit dem jeweiligen Aufnahmemittel in Eingriff gebracht.

Somit ist insbesondere ermöglicht, dass das jeweilige Expansionselement nach dem formschlüssigen Fixieren mittels des jeweiligen Aufnahmemittels geführt aufgenommen ist, sodass sichergestellt ist, dass eine entsprechend nachfolgende Axialbewegung derart erfolgt, dass das jeweilige Expansionselement nicht aus seiner Position bewegt werden kann. Insgesamt ist damit ein gesichertes Einbringen des jeweiligen Befestigungselementes gemäß einer der oben genannten Ausführungsformen ermöglicht.

Eine "Kernverbundstruktur" beschreibt dabei insbesondere eine auch als "Sandwich"-Struktur bekannte mechanische Anordnung, bei der eine obere Decklage und eine untere Decklage jeweils beidseits einer Kernstruktur angeordnet sind, sodass ein besonders biegesteifer und dennoch leichter Aufbau erreicht ist. Üblicherweise ist die "Kernstruktur" dabei besonders leicht, jedoch schubsteif ausgeführt, beispielsweise als Fachwerkstruktur, als Schaum, als Wabenstruktur oder dergleichen. Es sei darauf hingewiesen, dass die jeweilige obere Öffnung und/oder die jeweilige untere Öffnung auch wiederholt angeordnet sein kann, sodass beispielsweise Reihen und/oder Spalten oder andere Muster von Öffnungen auf der jeweiligen Decklage angeordnet sind, wodurch ein besonders flexibles Einbringen eines entsprechenden Befestigungselementes in eine jeweilige Öffnung ermöglicht ist. Hierzu kann entlang eines Randbereiches der jeweiligen Öffnung auch eine Vertiefung derart eingeprägt sein, dass das Befestigungselement, insbesondere das Grundelement, flächenbündig zu einer Oberseite der jeweiligen Decklage positionierbar ist.

Das jeweilige Expansionselement ist dabei mit dem jeweiligen Aufnahmemittel "in Eingriff", also mechanisch derart aneinander angeordnet, dass beispielsweise eine Rotation des Expansionselementes während des mechanischen Verspannens gegenüber der jeweiligen Decklage nicht mehr ermöglicht ist.

In einer Ausführungsform ist dabei das jeweilige Aufnahmemittel der jeweiligen Decklage aufgeprägt. Dabei weist das jeweilige Aufnahmemittel beispielsweise Vorsprünge und/oder Vertiefungen auf, in die das jeweilige Expansionselement axial eingreifen kann.

Ebenso kann, beispielsweise zum Aufnehmen einer bajonettartigen Ausführung des Befestigungselementes, das jeweilige Aufnahmemittel einen radial zur Längsachse angeordneten Vorsprung und/oder eine radial zur Längsachse angeordnete Vertiefung aufweisen. Damit kann beispielsweise auch innerhalb der jeweiligen Öffnung eine Begrenzung der Bajonettdrehung derart erfolgen, dass nachfolgend eine zwangsweise Betätigung der axialen Verspannung des Befestigungselementes erreicht wird.

Die jeweilige Öffnung und/oder die Kernstruktur sind dabei insbesondere gemäß Anspruch 13 geometrisch ausgeführt. Beispielsweise kann eine ovale Ausführung der jeweiligen Öffnung, kombiniert mit einem entsprechenden radialen Absatz sowohl die Bajonettfunktion, als auch die Funktion eines radialen Anschlags erfüllen.

Es sei darauf hingewiesen, dass die Decklagen beispielsweise aus Metall, einer Keramik, einem Kunststoff oder auch aus einem Faserverbundwerkstoff gebildet sein können. Die Kernstruktur kann beispielsweise ein Metallschaum oder ein Polymerschaum, ein Wabenkern, eine Fachwerkstruktur oder eine Faltstruktur aufweisen.

In einem weiteren Aspekt wird die Aufgabe gelöst durch ein Befestigungssystem gemäß Anspruch 14. Ein solches Befestigungssystem aus einer Kernverbundstruktur gemäß der vorig beschriebenen Ausführungsformen und eines oder mehreren jeweiligen Befestigungselementen bietet damit eine variable, reversible Anordnung von Anschlussmitteln innerhalb der Kernverbundstruktur für einen Anwender.

Gemäß einem weiteren Aspekt wird die Aufgabe gelöst durch ein Fahrzeug mit einer solchen Kernverbundstruktur, einem oder mehreren Befestigungselementen und/oder einem Befestigungssystem, jeweils der vorgenannten Ausführungen. Ein solches Fahrzeug kann dabei ein Landfahrzeug, ein Luftfahrzeug oder auch ein Wasserfahrzeug, beispielsweise ein Schiff oder eine Yacht, ein Flugzeug, ein Hubschrauber oder beispielsweise ein Kastenwagen sein. Ebenso ist das Befestigungssystem im industriellen Umfeld und in der Gebäudetechnik vorteilhaft anwendbar.

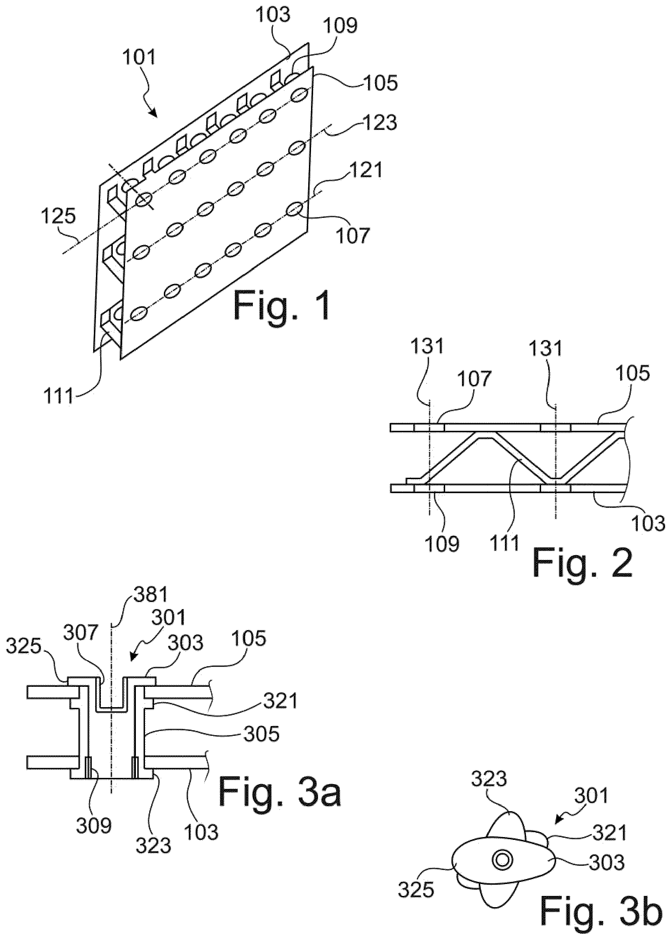

Im Weiteren wird die Erfindung anhand von Ausführungsbeispielen näher erläutert. Es zeigen
- Figur 1: eine schematische Darstellung eines Sandwich-Elementes in einer isometrischen Ansicht,
- Figur 2: eine geschnittene Seitenansicht des Sandwich-Elementes der Figur 1,
- Figur 3a: eine geschnittene Ansicht eines Befestigungsankers in einer montierten Position in dem Sandwich-Element der Figur 1,
- Figur 3b: den Befestigungsanker der Figur 3a in einer Draufsicht,

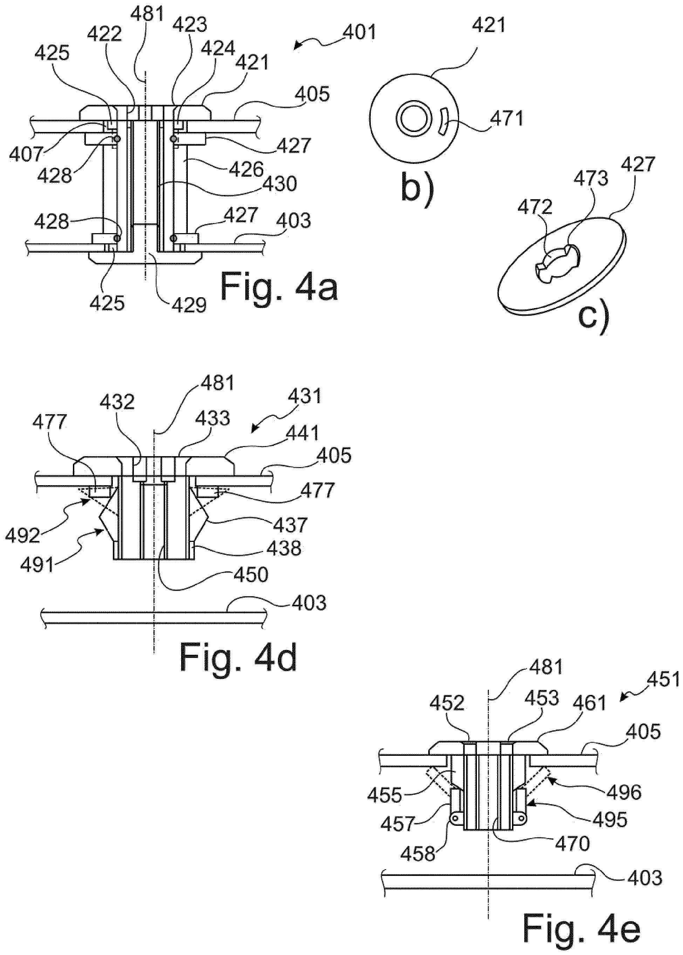

- Figur 4a: eine geschnittene Ansicht eines alternativen Befestigungsankers in einer montierten Position in einem Sandwich-Element,
- Figur 4b: eine Draufsicht auf eine Anlegscheibe des Befestigungsankers der Figur 4a,
- Figur 4c: eine isometrische Ansicht einer Bajonettscheibe des Befestigungsankers der Figur 4a,
- Figur 4d: eine geschnittene Ansicht eines alternativen Befestigungsankers in einer montierten Position in einem Sandwich-Element,
- Figur 4e: eine geschnittene Ansicht eines alternativen Befestigungsankers in einer montierten Position in einem Sandwich-Element,
- Figur 5: eine schematische Heckansicht eines geöffneten Transporters mit einem Befestigungssystem mit dem Sandwich-Element der Figur 1,
- Figur 6a: eine isometrische Ansicht einer Decklage einer Sandwich-Elementes mit einer Öffnung zum Aufnehmen eines Befestigungsankers, sowie
- Figur 6b: eine isometrische Ansicht einer Decklage einer Sandwich-Elementes mit einer alternativen Öffnung zum Aufnehmen eines Befestigungsankers.

Ein Sandwich-Element 101 ist aus einer unteren Decklage 103 sowie einer oberen Decklage 105 und einem Fachwerk-Kern 111 gebildet. Der Fachwerk-Kern 111 ist zwischen der unteren Decklage 103 und der oberen Decklage 105 angeordnet und mit diesen mechanisch verbunden. Die untere Decklage 103, die obere Decklage 105 sowie ihr Fachwerk-Kern 111 sind aus Stahlblech gebildet, wobei der Fachwerk-Kern 111 als gefaltete Fachwerkstruktur ausgebildet ist.

In der unteren Decklage 103 und der oberen Decklage 105 sind untere Öffnungen 109 sowie obere Öffnungen 107 jeweils in je einer Reihe 121, einer Reihe 123 und einer Reihe 125 nacheinander eingebracht. Aus den Reihen 121, 123 und 125 entsteht damit jeweils ein rechteckiges Muster aus oberen Öffnungen 107 und ein rechteckiges Muster aus unteren Öffnungen 109. Entsprechende untere Öffnungen 109 und obere Öffnungen 107 sind dabei entlang von senkrecht zu den Decklagen stehenden Achsen 131 direkt gegenüberliegend in den jeweiligen Decklagen angeordnet. Die oberen Öffnungen 107 und die unteren Öffnungen 109 sind jeweils oval ausgebildet, wobei die Halbachsen in die gleiche Richtung zeigen. Der Fachwerk-Kern 111 ist dabei so zwischen den Decklagen 103 und 105 angeordnet, dass ein jeweiliger Weg zwischen einer unteren Öffnungen 109 und einer oberen Öffnung 107 frei ist.

In das Sandwich-Element 101 ist beispielhaft ein Befestigungsanker 301 befestigt. Der Befestigungsanker 301 weist eine Buchse 303 auf, welche in eine Hülse 305 eingeschraubt ist. In der Buchse 303 ist ein Innengewinde 307 zum Befestigen weiterer Bauteile und zum Bedienen des Befestigungsankers eingebracht.

Mittels einer Gewindeverbindung 309 ist die Buchse 303 mit der Hülse 305 verbunden. Die Hülse 305 weist einen Absatz 321 und einen Absatz 323 auf, welche jeweils gegenüber der Buchse 303 hinter der jeweiligen Decklage 103 und 105 angeordnet sind und somit ein Verklemmen der Hülse 305 mittels der Buchse 303 an den jeweiligen Decklagen 103 und 105 ermöglicht.

Der Absatz 321 sowie der Absatz 323 sind oval, und zwar analog der ovalen Geometrie der unteren Öffnungen 109 und der oberen Öffnungen 107 ausgebildet, sodass der Befestigungsanker 301 in unterschiedlichen rotatorischen Positionen um eine Mittelachse 381 in das Sandwich-Element 101 einbringbar und mittels einer entsprechenden weiteren Rotation um die Mittelachse 381 verriegelt werden kann. Die Absätze 321 und 323 legen sich dabei dann hinter die jeweilige obere Decklage 105 und untere Decklage 103. Die Buchse 303 mit einem Absatz 325 verriegelt den Befestigungsanker 301 dann vollständig mit dem Sandwich-Element 301. Das Innengewinde 307 kann dabei sowohl, beispielsweise mittels eines entsprechenden Setzwerkzeuges, zum Einbringen und Verriegeln des Befestigungsankers 301 in dem Sandwich-Element 101 als auch zum späteren Befestigen diverser Gegenstände mittels einer einfachen Gewindeschraube genutzt werden. Insgesamt entsteht damit mittels des Befestigungsankers 301 ein formschlüssiger und mechanisch belastbarer Verbund mit dem Sandwich-Element 101.

Ein alternativer Befestigungsanker 401 ist beispielhaft in eine obere Decklage 405 und eine untere Decklage 403 analog zum obigen Beispiel in eine jeweilige Öffnung 407 eingebracht. Dazu weist der Befestigungsanker 401 eine Anlegscheibe 421 auf, welche auf einer Außenseite der oberen Decklage 405 angeordnet ist. In einer Senkbohrung konzentrisch in der Anlegscheibe 421 ist eine Bedienschraube 423 entlang einer Längsachse 481 eingebracht. Die Bedienschraube 423 weist zum Bedienen einen Innensechskant 422 sowie ein durchgehendes Innengewinde 430 auf. Im Bereich der oberen Decklage 405 ist ein Abstandsring 425 konzentrisch innerhalb der Öffnung 407 nahe an der Ebene der oberen Decklage 405 angeordnet. Innerhalb der oberen Decklage 405 ist eine Bajonettscheibe 427 auf die Bedienschraube 423 aufgebracht. Ein O-Ring 428 sichert hier eine reibschlüssige Mitnahme der Bajonettscheibe 427 bis zu einem Reibungs-Grenzwert. Weiterhin weist die Bajonettscheibe 427 neben einem Loch 472 zwei jeweils symmetrisch zum Loch beidseitig angeordnete Segmente 473 auf, in die jeweilige axial verlaufende Mitnehmer 424 an der Anlegscheibe 421 eingreifen und eine rotatorische Freiheit der Bajonettscheibe 427 gegenüber der Anlegscheibe 421 von etwa 30° sicherstellen. Damit kann bei einem Drehen der Bedienschraube 423 mittels Reibschlusses beispielsweise die Anlegscheibe 421 und damit auch die Bajonettscheiben 427 verdreht werden, bevor ein Verspannen mittels eines weiteren Drehens der Bedienschraube 423 erfolgt. Alternativ kann eine jeweilige Bajonettscheibe 427 auch durch ein Segmentloch 471 in der Anlegscheibe 421 betätigt werden, beispielsweise mittels eines stiftartigen Spezialwerkzeuges (nicht dargestellt).

Im Bereich der unteren Decklage 403 ist im Innenbereich eine weitere Bajonettscheibe 427 auf gleiche Weise angeordnet, wobei diese ebenfalls mittels eines O-Rings 428 an die Bedienschraube 423 reibschlüssig gekoppelt ist. Eine Abstandshülse 426 sichert einen Abstand der beiden beschriebenen Bajonettscheiben 427 derart, dass diese mit einer leichten Vorspannung zwischen der oberen Decklage 405 und der unteren Decklage 403 eingespannt sind. Dazu kann die Abstandshülse 426 beidseits entlang der Längsachse 481 auch die Segmente 472 eingreifende Verlängerungen aufweisen, um den möglichen Drehwinkel der jeweiligen Bajonettscheibe 427 zu koppeln und zu begrenzen. Eine Bundschraube 429, die ebenfalls die Grundform der Bajonettscheiben 427 aufweist (nicht dargestellt) ist von einer Rückseite an der unteren Decklage 403 angeordnet. Ein Einsetzen des Befestigungsankers 401 erfolgt nun derart, dass die gesamte Anordnung mit den jeweiligen Bajonettscheiben 427 und der Bundscheibe 429 so angeordnet wird, dass diese in die analog zur jeweiligen Bajonettscheibe 427 und der Bundscheibe 429 ausgestalteten ovalen Öffnungen im Kernverbund eingeführt werden und sodann mittels einer Bedienung des Innensechskants 422 zunächst ein formschlüssiges Fixieren durch Verdrehen der gesamten Anordnung und damit bajonettartigen Verbindung mit dem Kernverbund erfolgt. Die Bajonettscheiben 427 schlagen dann beispielsweise gegen Drehanschläge der Decklagen (vergleiche hierzu Ausgestaltung einer Decklage weiter unten) und/oder werden durch die Segmente 473 nur einen Teilwinkel verdreht, sodass die Bajonettbewegung jeweils begrenzt wird. Ein weiteres Drehen der Befestigungsschraube 423 führt dann zu einem Überwinden des Reibschlusses der O-Ringe 428 und einem Verschrauben der Befestigungsschraube 423 und der Bundschraube 429, sodass der Befestigungsanker 401 im Kernverbund befestigt ist. Die Bundschraube 429 kann dabei mittels eines axial wirksamen Federelementes wie einem Federring (nicht gezeigt) radial reibschlüssig und axial beweglich mit der unteren Decklage 403 gehalten werden, sodass die Bundschraube 429 nicht mittdreht. Mit dem Innengewinde 430 steht dann ein Befestigungspunkt zum Anschrauben von Lasten im Kernverbund zur Verfügung.

Ein alternativer Befestigungsanker 431 ist nur zum Anschluss an die obere Decklage 405 vorgesehen und weist anstelle der Bajonettfunktion eine Spreizfunktion auf. Dazu sind auf einer Befestigungsschraube 433 mit einem Innensechskant 432 auf einem Außengewinde (nicht dargestellt) ein Gewindering 438 mit zwischen einer Anlegescheibe 441 und dem Gewindering 438 verlaufenden Spreizarmen 437 angeordnet. Wird nun die Befestigungsschraube 433 rotatorisch bewegt, so wird der Gewindering 438 in Richtung der oberen Decklage 405 bewegt und spreizt die Spreizarme 437 von einer Ruheposition 491 in eine Expansionsposition 492. Ein weiteres Verschrauben der Befestigungsschraube 433 führt dann neben dem so erreichten Formschluss zu einem kraftschlüssigen Fixieren der oberen Decklage 405 zwischen der Anlegescheibe 441 und den Spreizarmen 437. Als Vorsprünge ausgebildete Drehanschläge 477 an der Innenseite der oberen Decklage 405 verhindern dabei ein Verdrehen der Spreizarme 437.

Ein weiterer alternativer Befestigungsanker 451 weist eine Bedienschraube 453 auf, welche in einer Anlegscheibe 463 analog der vorigen Beispiele eingebracht ist. Auf einer Oberseite weist die Bedienschraube eine Reibfläche 452 mit einer Rändelung auf, sodass diese manuell bedient werden kann. Im Bereich einer Öffnung in der oberen Decklage 405 ist konzentrisch um die Bedienschraube 453 ein Lenkring 455 angeordnet, welcher an jeweiligen Lagern 458 angeordnete Spannarme 457 bei einer Axialbewegung der Lager 458 auf einem Außengewinde (nicht dargestellt) der Bedienschraube 453 nach außen und unter die jeweiligen Randbereiche der oberen Decklage 405 auslenkt. Alternativ können die Spannarme 457 auch ohne Lager 485 auf dem Lenkring 455 aufliegen und schräg gegenüber der Längsachse 481, beispielsweise mit einem Führungsstück (nicht gezeigt) zwangsgeführt sein. Wird nun die Bedienschraube 453 bedient, so werden die Spannarme 457 zunächst nach außen ausgelenkt und sodann unter die Decklage 405 verbracht, sodass zunächst ein formschlüssiges Verbinden der Decklage zwischen den Spannarmen 457 und der Anlegscheibe 463 erfolgt und dann bei weiterem Bedienen der Bedienschraube 453 ein kraftschlüssiges Verbinden mit der oberen Decklage 405 durch ein Verspannen erfolgt. In diesem Fall ist dann mit einem Innengewinde 470 innerhalb der Bedienschraube 453 eine Befestigung weiterer Gegenstände am Kernverbund möglich.

Beispielhaft sei ein aus dem Sandwich-Element 101 und einer Mehrzahl von entsprechenden Befestigungsankern 301 gebildetes Befestigungssystem anhand eines Transporters 501 erläutert:

Der Transporter 501, welcher zum besseren Verständnis mit Rädern 503 dargestellt ist, weist einen Befestigungspunkt 505 sowie einen befestigungspunkt 507 auf, welche jeweils seitens des Transporters 501 bereitgestellt sind, beispielsweise als Teile der Karosserie. An dem Befestigungspunkt 505 und dem Befestigungspunkt 507 ist das Sandwich-Element 101 befestigt, hierzu können beispielsweise die jeweiligen Öffnungen 17 und 109 genutzt werden.

Mittels Befestigungsankern 301 sind an unterschiedlichen Positionen des Sandwich-Elementes 101 Befestigungspunkte geschaffen, an denen beispielhaft ein Haken 531 sowie ein Werkzeugkoffer 533 (nur schematisch dargestellt) befestigt sind. Der einzelne Haken 531 ist dabei mittels eines Befestigungsankers 301 am Sandwich-Element 101 befestigt, der Werkzeugkoffer 533 mittels mehrerer Befestigungsanker 301 entlang entsprechender Achse 551 und 553, welche entsprechend fluchtend mit jeweiligen Achsen 131 des Sandwich-Elementes 101 angeordnet sind. Alternativ dazu können auch Befestigungsanker 401, 431 und/oder 451 genutzt werden. Insgesamt ist dabei im Transporter 501 ein flexibles Befestigungssystem für beispielsweise Werkzeuge, Einbauten und dergleichen geschaffen. Alternativ kann mittels eines solchen Befestigungssystems auch in Flugzeugen, Schiffen oder anderen Landfahrzeugen eine flexible Möglichkeit zum Befestigen diverser Gegenstände geschaffen werden.

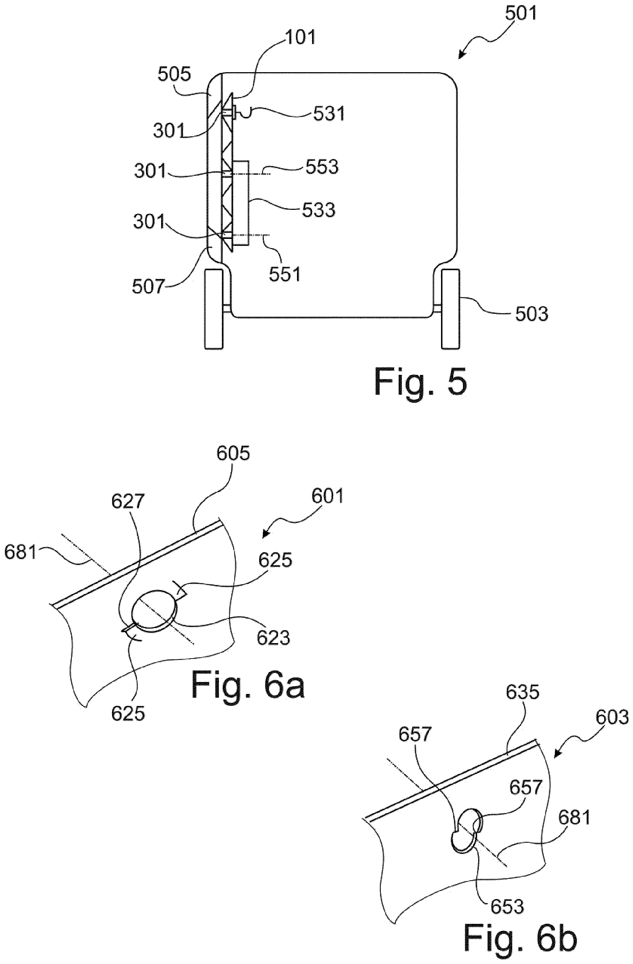

Ein Ausschnitt 601 aus einer beispielhaften oberen Decklage 405 mit einer ovalen Öffnung 623 zeigt die Ausführung einer Begrenzung der Drehbewegung von beispielsweise der Bajonettscheibe 427 oder der Spreizarme 437. Als Bezug ist hier eine Längsachse 681 gezeigt (vergleiche Figur 6a), welche einer jeweiligen Befestigungsachse eines Befestigungsankers aus den vorigen Beispielen entspricht. Prägungen 625, welche beispielsweise in eine metallische Decklage eingebracht werden können, formen einen jeweiligen Drehanschlag 627 an radialen Positionen der Öffnung 623. Im hier dargestellten Beispiel sind dies zwei Drehanschläge 627 jeweils 180° um die Längsachse 681 versetzt. Eine weitere Alternative ist mit einem Ausschnitt 603 in Figur 6b dargestellt, wobei in einer Decklage 635 eine ovale Öffnung 683 eingebracht ist, wobei die ovale Öffnung 683 radial angeordnete Drehanschläge 657 aufweist.

### Bezugszeichenliste

- 101: Sandwich-Element
- 103: untere Decklage
- 105: obere Decklage
- 107: obere Öffnung
- 109: untere Öffnung
- 111: Fachwerk-Kern
- 121: Reihe
- 123: Reihe
- 125: Reihe
- 131: Achse
- 301: Befestigungsanker
- 303: Buchse
- 305: Hülse
- 307: Innengewinde
- 309: Gewindeverbindung
- 321: Absatz
- 323: Absatz
- 325: Absatz
- 381: Mittelachse
- 401: Befestigungsanker
- 403: untere Decklage
- 405: obere Decklage
- 407: Öffnung
- 421: Anlegscheibe
- 422: Innensechskant
- 423: Bedienschraube
- 424: Mitnehmer
- 425: Abstandsring
- 426: Abstandshülse
- 427: Bajonettscheibe
- 428: O-Ring
- 429: Bundschraube
- 430: Innengewinde
- 431: Befestigungsanker
- 432: Innensechskant
- 433: Bedienschraube
- 437: Spreizarme
- 438: Gewindering
- 441: Anlegscheibe
- 450: Innengewinde
- 451: Befestigungsanker
- 452: Reibfläche
- 453: Bedienschraube
- 455: Lenkring
- 457: Spannarm
- 458: Lager
- 461: Anlegscheibe
- 470: Innengewinde
- 471: Segmentloch
- 472: Loch
- 473: Segment
- 477: Drehanschlag
- 481: Längsachse
- 491: Ruheposition
- 492: Expansionsposition
- 495: Ruheposition
- 496: Expandierposition
- 501: Transporter
- 503: Rad
- 505: Befestigungspunkt
- 507: Befestigungspunkt
- 531: Haken
- 533: Werkzeugkoffer
- 551: Achse
- 553: Achse
- 601: Ausschnitt
- 603: Ausschnitt
- 605: Decklage
- 623: Öffnung
- 625: Prägung
- 627: Drehanschlag
- 635: Decklage
- 657: Drehanschlag
- 681: Längsachse
- 683: Öffnung

## Patentansprüche

1. Befestigungselement (301, 401, 431, 451) zum Bereitstellen eines Anschlusselementes (307, 430, 450, 470) an einem Befestigungsort (105, 107) in einer Kernverbundstruktur (101) mit einer oberen Decklage (105, 405), einer unteren Decklage (103, 403) und einer zwischen der oberen Decklage (105, 405) und der unteren Decklage (103, 403) angeordnete Kernstruktur (111), mit einem Grundelement (303, 421, 441, 461), einer Betätigungseinrichtung (325, 423, 433, 453), einem ersten Expansionselement (321, 427, 437, 457) und einer Längsachse (381), wobei das Grundelement (303, 421, 441, 461) das Anschlusselement (307, 430, 450, 470) und das erste Expansionselement (321, 427, 437, 457) mechanisch aufnimmt, die Betätigungseinrichtung (325, 423, 433, 453) mit dem ersten Expansionselement (321, 427, 437, 457) mechanisch wirkverbunden ist, ein radiales Betätigungsmittel (428, 438) aufweist und das radiale Betätigungsmittel (428, 438) bei einer ersten Bewegung der Betätigungseinrichtung (325, 423, 433, 453) gegenüber dem Grundelement (303, 421, 441, 461) ein im Wesentlichen radial gegenüber der Längsachse (381) zumindest abschnittsweises Erweitern des ersten Expansionselementes (321, 427, 437, 457) von einer ersten Ruheposition (491) in eine erste Expansionsposition (492) zum formschlüssigen Befestigen des Befestigungselementes zwischen dem ersten Expansionselement (321, 427, 437, 457) und dem Grundelement (303, 421, 441, 461) an einem Randbereich einer Öffnung (107) in der oberen Decklage (105, 405) bewirkt, **dadurch gekennzeichnet, dass,** das erste Expansionselement (321, 427, 437, 457) an einer Führungseinrichtung (423, 433, 453) des Grundelementes (303, 421, 441, 461) entlang der Längsachse (381) mechanisch geführt ist und die Betätigungseinrichtung (325, 423, 433, 453) mittels eines axialen Betätigungsmittels (429) bei einer zweiten Bewegung der Betätigungseinrichtung (325, 423, 433, 453) eine Axialbewegung des ersten Expansionselementes (321, 427, 437, 457) von der ersten Expansionsposition in eine erste Spannposition entlang der Längsachse gegenüber dem Grundelement (303, 421, 441, 461) zum Erreichen eines Kraftschlusses des Grundelementes (303, 421, 441, 461) und des ersten Expansionselementes (321, 427, 437, 457) mit der zwischen dem Grundelement (303, 421, 441, 461) und dem ersten Expansionselement (321, 427, 437, 457) angeordneten oberen Decklage (105, 405) bewirkt.

2. Befestigungselement gemäß Anspruch 1, **dadurch gekennzeichnet, dass** das erste Expansionselement (321, 427, 437, 457) ein in der ersten Expansionsposition und/oder in der ersten Spannposition an der unteren Decklage (103, 403) anliegendes Abstandselement (305, 426) aufweist, wobei eine Länge des Abstandselementes (305, 426) entlang der Längsachse (381) im Wesentlichen einer Dicke der Kernstruktur (111) zwischen der oberen Decklage (105, 405) und der unteren Decklage am Befestigungsort entspricht.

3. Befestigungselement gemäß Anspruch 2, **dadurch gekennzeichnet, dass** das Abstandselement (305, 426) ein in einem zur Länge korrespondierenden Abstand zum ersten Expansionselement (321, 427, 437, 457) angeordnetes zweites Expansionselement (323, 427) aufweist, wobei das radiale Betätigungsmittel bei der ersten Bewegung der Betätigungseinrichtung (325, 423, 433, 453) gegenüber dem Grundelement (307, 421, 431, 441) ein im Wesentlichen radial gegenüber der Längsachse (381) zumindest abschnittsweises Erweitern des zweiten Expansionselementes (323, 427) von einer zweiten Ruheposition in eine zweite Expansionsposition zum formschlüssigen Befestigen des Befestigungselementes zwischen dem Abstandselement (305, 426) und dem zweiten Expansionselement (323, 427) an einem Randbereich einer Öffnung in der unteren Decklage bewirkt, wobei insbesondere mittels des axialen Betätigungsmittels bei der zweiten Bewegung der Betätigungseinrichtung (325, 423, 433, 453) eine Axialbewegung des zweiten Expansionselementes (323, 427) von der zweiten Expansionsposition in eine zweite Spannposition entlang der Längsachse (381) gegenüber dem Abstandselement (305, 426) zum Erreichen eines Kraftschlusses des Abstandselementes (305, 426) und des zweiten Expansionselementes (323, 427) mit der zwischen dem Abstandselement (305, 426) und dem zweiten Expansionselement (323, 427) angeordneten unteren Decklage bewirkt.

4. Befestigungselement gemäß einem der vorherigen Ansprüche, **dadurch gekennzeichnet, dass** das erste Expansionselement (321, 427, 437, 457) und/oder das zweite Expansionselement (323, 427) mittels eines radialen Federelementes reversibel verformbar ausgeführt ist oder sind und/oder dass das jeweilige Expansionselement aus der jeweiligen Ruheposition mittels eines radial-axialen Betätigungsmittels der Betätigungseinrichtung (325, 423, 433, 453) mit der ersten Bewegung und der zweiten Bewegung der Betätigungseinrichtung (325, 423, 433, 453) durch eine Verspannungsbewegung gegenüber dem Grundelement und/oder gegenüber dem Abstandselement entlang einer in einem spitzen Winkel zur Längssachse angeordneten Verspannungsrichtung zum Erreichen eines Formschlusses und eines Kraftschlusses des Grundelementes (303, 421, 441, 461) und des ersten Expansionselementes (321, 427, 437, 457) und/oder des Abstandselements (305, 426) und des zweiten Expansionselementes (323, 427) mit dem Randbereich der jeweiligen Decklage (103, 105, 403, 405)in eine Verspannungsposition bewegbar ist.

5. Befestigungselement gemäß einem der vorherigen Ansprüche, **dadurch gekennzeichnet, dass** das erste Expansionselement (321, 427, 437, 457) und/oder das zweite Expansionselement (323, 427) mittels einer in Bezug zur Längsachse (381) um einen Umfang radial ungleichförmigen, hinterschneidungsbildenden Formgebung einen jeweiligen zu einer korrespondierenden radial ungleichförmigen, hinterschneidungsbildenden Öffnungsform der Öffnung in der oberen Decklage und/oder der Öffnung in der unteren Decklage wirkenden Bajonettverschluss bildet.

6. Befestigungselement gemäß einem der vorherigen Ansprüche, **dadurch gekennzeichnet, dass** das radiale Bedienmittel ein radiales Begrenzungsmittel (473) aufweist, wobei die erste, insbesondere als Drehbewegung ausgeführte Bewegung der Betätigungseinrichtung (325, 423, 433, 435) um die Längsachse, einen durch das radiale Begrenzungsmittel (473) rotatorisch begrenzten Drehwinkel von weniger als 30°, weniger als 25°, weniger als 20°, insbesondere weniger als 15°, aufweist.

7. Befestigungselement gemäß Anspruch 5 oder 6, **dadurch gekennzeichnet, dass** das radiale Betätigungsmittel, das axiale Betätigungsmittel und/oder das radial-axiale Betätigungsmittel mittels eines Reibschlusses, mittels einer Sollbruchstelle und/oder mittels eines mechanischen Freilaufs insbesondere mit einem Freilaufwinkel derart mechanisch miteinander gekoppelt sind, dass die erste, als Drehbewegung ausgebildete Bewegung und die zweite, als Drehbewegung ausgebildete Bewegung bei einer gleichgerichteten fortlaufenden Drehbewegung der Betätigungseinrichtung (325, 423, 433, 453), insbesondere mittels des Freilaufwinkels, zwangsweise aufeinanderfolgend gekoppelt sind.

8. Befestigungselement gemäß einem der vorherigen Ansprüche, **dadurch gekennzeichnet, dass** die Betätigungseinrichtung (325, 423, 433, 453) eine Rändelung (452), eine Werkzeugaufnahme (307, 422, 432) und/oder ein Schloss aufweist, sodass ein Bedienen der Betätigungseinrichtung manuell, mittels eines zur Werkzeugaufnahme korrespondierenden Werkzeuges und/oder mittels eines zum Schloss korrespondierenden Schlüssels ermöglicht ist.

9. Befestigungselement gemäß einem der vorherigen Ansprüche, **dadurch gekennzeichnet, dass** das Anschlusselement (307, 430, 450, 470) an der Betätigungseinrichtung (325, 423, 433, 453) angeordnet ist, wobei das Anschlusselement (307, 430, 450, 470) insbesondere als entlang der Längssachse (381) angeordnetes Gewinde in der Betätigungseinrichtung ausgebildet ist.

10. Kernverbundstruktur (101), insbesondere Sandwich-Struktur, mit einer oberen Decklage (105), einer Kernstruktur (111) und einer unteren Decklage (103), wobei die Kernstruktur (111) zwischen der oberen Decklage und der unteren Decklage angeordnet und mit der oberen Decklage (105) und der unteren Decklage (103) derart verbunden ist, dass ein Übertragen von Kräften zwischen der jeweiligen Decklage und der Kernstruktur ermöglicht ist, **dadurch gekennzeichnet, dass** die obere Decklage (105) und/oder die untere Decklage (103) eine die jeweilige Decklage vollständig durchdringende obere Öffnung (107) und/oder untere Öffnung (109) mit zumindest einem an zumindest einer der jeweiligen Öffnungen angeordneten jeweiligen Aufnahmemittel (477, 627, 657) für das erste Expansionselement (321, 427, 437, 457) und/oder das zweite Expansionselement (323, 427) eines Befestigungselementes gemäß einem der vorherigen Ansprüche aufweist oder aufweisen, sodass ein reversibles, formschlüssiges und kraftschlüssiges Einbringen eines zur jeweiligen Öffnung korrespondierenden Befestigungselementes an der Kernverbundstruktur mittels eines formschlüssigen und kraftschlüssigen Befestigens des Befestigungselementes in der oberen Öffnung und/oder der unteren Öffnung ermöglicht ist, wobei das erste Expansionselement (321, 427, 437, 457) und/oder das zweite Expansionselement (323, 427) in der jeweiligen Expansionsposition und/oder in der jeweiligen Spannposition mit dem jeweilige Aufnahmemittel (477, 627, 657) in Eingriff gebracht ist oder sind.

11. Kernverbundstruktur gemäß Anspruch 10, **dadurch gekennzeichnet, dass** das jeweilige Aufnahmemittel (477, 627, 657) der jeweiligen Decklage aufgeprägt ist, wobei das jeweilige Aufnahmemittel (477, 627, 657) im Wesentlichen parallel zur Längsachse (381) angeordnete Vorsprünge und/oder im Wesentlichen parallel zur Längsachse angeordnete Vertiefungen (627) aufweist, sodass das erste Expansionselement (321, 427, 437, 457) und/oder das zweite Expansionselement (323, 427) in der jeweiligen Expansionsposition und/oder in der jeweiligen Spannposition axial entlang der Längsachse (381) in das Aufnahmemittel (477, 627, 657) eingreifen und somit ein Verdrehen des jeweiligen Expansionselementes um die Längsachse (381) verhindert ist.

12. Kernverbundstruktur gemäß Anspruch 10 oder 11, **dadurch gekennzeichnet, dass** das jeweilige Aufnahmemittel (477, 627, 657) der jeweiligen Decklage aufgeprägt ist, wobei das jeweilige Aufnahmemittel insbesondere zumindest einen im Wesentlichen radial zur Längsachse angeordneten Vorsprung (657) und/oder zumindest eine im Wesentlichen radial zur Längsachse angeordnete Vertiefung aufweist, sodass das erste Expansionselement (321, 427, 437, 457) und/oder das zweite Expansionselement (323, 427) in der Expansionsposition im Wesentlichen radial zur Längsachse (381) in das Aufnahmemittel eingreifen und somit ein Verdrehen des jeweiligen Expansionselementes um die Längsachse verhindert ist, wobei insbesondere mittels einer lokalen Veränderung des Radius des Aufnahmemittels ein mechanisches Begrenzen des Freilaufwinkels erfolgt.

13. Kernverbundstruktur gemäß einem der vorherigen Ansprüche, **dadurch gekennzeichnet, dass** die jeweilige obere Öffnung (107) und/oder die jeweilige untere Öffnung (109) kreisförmig, oval, ogival, mehrfach oval, mehrfach ogival, dreieckig, viereckig, fünfeckig, sechseckig oder mehreckig ausgebildet ist und/oder die Kernstruktur (111) zwischen einer jeweiligen oberen Öffnung (107) und einer jeweiligen unteren Öffnung (109) angeordnete Durchbrüche zwischen der oberen Decklage und der unteren Decklage aufweist, sodass das Befestigungselement in der jeweiligen Expansionsposition und/oder in der jeweiligen Spannposition in einem jeweiligen Durchbruch zwischen der jeweiligen oberen Öffnung (107) und der jeweiligen unteren Öffnung (109) angeordnet ist.

14. Befestigungssystem mit einem Befestigungselement oder mehreren Befestigungselementen gemäß einem der Ansprüche 1 bis 9 und einer Kernverbundstruktur gemäß einem der Ansprüche 10 bis 13, sodass mittels des Befestigungselementes oder der Befestigungselemente eine insbesondere variable, reversible Anordnung von Anschlussmitteln innerhalb der Kernverbundstruktur ermöglicht ist.

15. Fahrzeug (501) mit einer Kernverbundstruktur gemäß einem der Ansprüche 10 bis 13, einem oder mehreren Befestigungselementen gemäß Anspruch 1 bis 9 und/oder einem Befestigungssystem gemäß Anspruch 14.
